# EUROPEAN PATENT APPLICATION

(11) **EP 1 209 675 A1**
(43) Date of publication of application: **29.05.2002**
(21) Application number: 00403288.4
(22) Date of filing: 24.11.2000
(51) Int. Cl.: G11B 15/12, G11B 15/02, G11B 15/14

(54) **Head switching control apparatus for a magnetic tape recorder**

(71) Applicant: Thomson Licensing S.A., 92648 Boulogne Cedex (FR)
(72) Inventor: Kwok, Kwong Heng, Singapore (SG); Engesser, Jürgen, 79843 Loeffingen (DE)
(74) Representative: Rossmanith, Manfred, Dr.

(57) **Abstract**

The present invention is related to head switching control apparatus for use in a magnetic tape recorder. Based on the technology, which is widely used for head switching control in analogue tape recorders and in particular in VHS video cassette recorders the present invention suggest a head switching control apparatus allowing a higher precision as it is required for digital tapes. The invention is applicable e.g. for tapes which are recorded according to the D-VHS standard.

According to the invention the higher precision is achieved by adjusting the head switching pulse relative to the beginning of a certain data section of the digital data. In particular, the inventive apparatus comprises a digital data processing circuit for discriminating the beginning of said data section. A timer is started by the head-switching signal and stopped by the beginning of the data section to determine the time duration a head-switching signal precedes the beginning of the data section. The determined time duration is then used to calculate a second delay time. The second delay time allows achieving the required head switching precision for digital tapes.

## Description

The invention is related to video tape recorders and in particular to a head switching control apparatus for use with a magnetic tape having data tracks and at least a control track.

The most widely used video tape recorders are conventional video cassette recorders according to the VHS standard. The video tapes according to the VHS standard have slanted video tracks and a longitudinal CTL control track for controlling the servo system of the VCR. The servo system of these VCR comprises a head servo circuit for controlling the rotation speed and rotation phase of the video heads mounted on a rotary drum. A drum pick-up sensor generates a drum signal, which indicates the head position. Furthermore, the servo system comprises a capstan circuit for transporting the magnetic tape at a constant speed during recording and in synchronisation with recorded control signals in the control track during reproduction. According to the VHS standard the control signals correspond to the vertical synchronisation signals of the recorded video signal. For an optimum tracking of the video heads on the data tracks, a specific phase relationship between the drum signal and the control signal has to be maintained. The specific phase relationship depends on the real mounting position of the control head on the chassis and of the video heads on the drum. Consequently, the phase relationship varies from VCR to VCR to the extent as the mounting positions of the control head and the video heads are different between individual VCRs. With a single phase value between the drum signal and the control signal the variations of the mounting positions of the heads would cause a misalignment between a reading video head and a video track on the played back video tape if the video tape has been recorded on a different VCR. It is well known that this kind of misalignment has a negative effect on the quality of the reproduced picture. In order to maintain the compatibility between individual VCRs, the phase relationship between the recorded vertical synchronisation signal and the head-switching signal is set up as a standard and adjusted during the manufacture of a VCR.

Nowadays this adjustment is performed by software executed in a microprocessor controlling the functions of the VCR. During manufacture a test tape having the best possible alignment between the vertical synchronisation signals and video signals is loaded in the VCR and the alignment process is started. During the alignment process the microprocessor receives pick-up pulses of the drum representing the actual position of the heads. The microprocessor also receives the vertical synchronisation signal read the video track and calculates the time duration between the two pulses. According to the VHS standard, the head switching pulse switching over between the rotating video heads has to occur 6.5 horizontal lines or 416 microseconds before the corresponding vertical synchronisation pulse. To achieve this, the head switching pulse is triggered by the pick-up pulse of the drum and then delayed by a defined delay time calculated by the microprocessor such that the head switching pulse precedes the vertical synchronisation pulse as required by the standard. The VHS standard calls for an alignment precision of +/- 1.5 horizontal lines or 96 microseconds. This is readily achieved by the described process which has been published e.g. in ICCE Digest of Technical Papers, June 8 to 10, 1988, page 92 ff.

However, the VHS standard is limited to analogue video signals and the alignment precision feasible by the described process may not be sufficiently precise for tapes containing digital data in the slanted tracks e.g. tapes recorded according to the more recent D-VHS standard.

It is therefore desirable to provide a head switching control apparatus for use with magnetic tape containing digital data in the slanted tracks. In particular, it is desirable to provide an apparatus capable of achieving a higher alignment precision than hitherto.

According to the invention a head switching control apparatus for use with magnetic is provided. The apparatus has a head drum with at least two rotary heads arranged on it. In an embodiment of the invention the heads are arranged in a substantially 180-degree configuration on the circumference of the head drum. A capstan motor rotates at a predetermined speed to transport the magnetic tape. Since the head switching control is based essentially on measuring time relationships between different kinds of signals the apparatus is equipped with a first timer for providing time data. A reference signal generator generates a predetermined reference signal in association with the time data. A control signal reader reproduces a control signal from the magnetic tape in association with the time data. A head switching signal generator generates head switching signals in association with the time data. The head switching signals are triggered by the reference signal and delayed by a predetermined first delay time. A microprocessor calculates the time duration between the reference signal and the next following control signal and calculates as well the delay time of the head switching signal following the reference signal and preceding the control signal to establish a predetermined time relationship between the head switching signal and the control signal. It is preferred to utilize the vertical synchronisation signal as control signal.

According to the invention the data track is composed of digital data comprising at least one data section. The apparatus furthermore comprises a digital data processing circuit for discriminating the beginning of said data section. The digital data processing circuit is equipped with a second timer started by the head switching signal and stopped by the beginning of said data section to determine the time duration a head switching signal precedes the beginning of said data section. Finally, the digital data processing circuit supplies this time data to the microprocessor, which calculates a second delay time to bring said time data in accordance with a predetermined value. The alignment precision achievable by the inventive apparatus is higher than that of a conventional head switching control apparatus used in VHS VCRs.

Another embodiment of the inventive head switching control apparatus is provided with a first memory for storing the first and the second delay times for selective reproduction. It is advantageous to use a non-volatile memory as the first memory and to store the first and the second delay times at different addresses. The required delay time is then copied into a second memory. It is preferred to choose a volatile random access memory for the second memory to reduce access times.

In yet another embodiment of the invention the microprocessor is responsive to an indication signal indicating whether the data track of the loaded magnetic tape contains analogue or digital data. In response to the indication signal the microprocessor reads the first and the second delay times from the first memory, respectively.

According to a second aspect of the invention a method for performing head switching control is provided utilizing an apparatus according to the first aspect of the invention.

The invention will be described in more detail in the following description taken in connection with the accompanying drawings in which:
Fig. 1 shows a track structure of a magnetic tape;
Fig. 2 is a schematic block diagram of a head switching control apparatus according to the invention;
Fig. 3 is a diagram showing the timing of different signals processed in the head switching control apparatus;
Fig. 4 is a flow diagram for analogue head switching control;
Fig. 5 is an exemplary data structure recorded on the tape shown in Fig. 1 and
Fig. 6 is a flow diagram for digital head switching control.

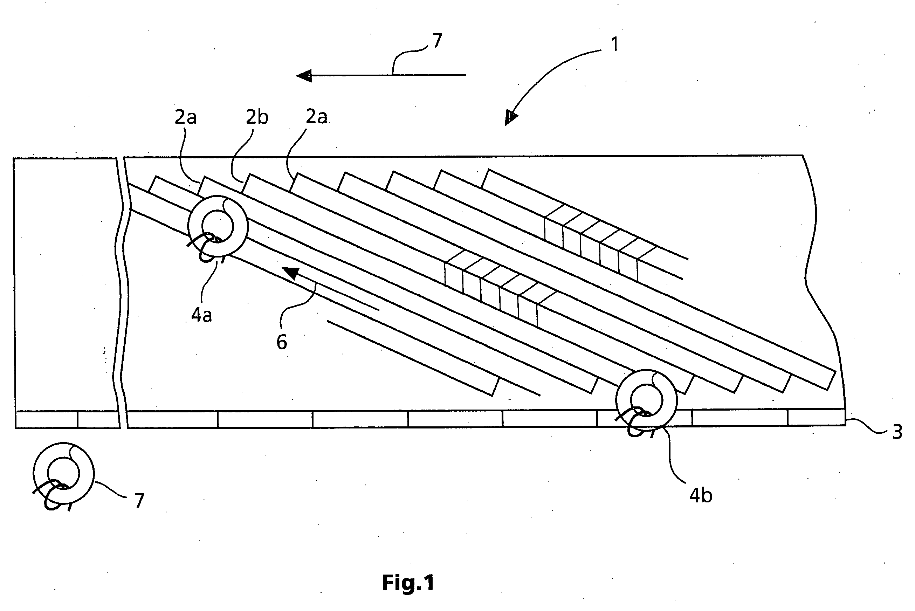

Fig. 1 visualizes a portion of a magnetic tape 1 having slanted data tracks 2a and 2b and a longitudinal control track 3. The data tracks may be composed of analogue or digital data. However, in the described embodiment of the present invention the data tracks contain digital data. In particular the invention is useful in connection with a magnetic tape recorded according to the D-VHS standard. The data tracks are read by a pair of reading heads 4a and 4b mounted on the rotating cylinder of a head drum as it is well-known e.g. from VHS video cassette recorders (VCR). The reading direction of the heads is indicated at a reference number 6 and the tape transport direction is shown by arrow 7. As it will be described in the following the apparatus is operated in such a way that the reading head 4a reads sequentially the data tracks 2a and in an alternating manner the reading head 4b reads the data tracks 2b. In order to minimize the cross talk of neighbouring data tracks 2a, 2b, the data tracks are written with alternating azimuth angles. By way of example in the VHS standard the azimuth angle for data track 2a is + 6 degrees and the azimuth angle for data track 2b is - 6 degrees. Finally, the CTL head 7 reads recorded control signals from the longitudinal control track 3. The control signals are used to make sure the reading heads 4a, 4b follow their associated data tracks. A head switching control apparatus achieves this.

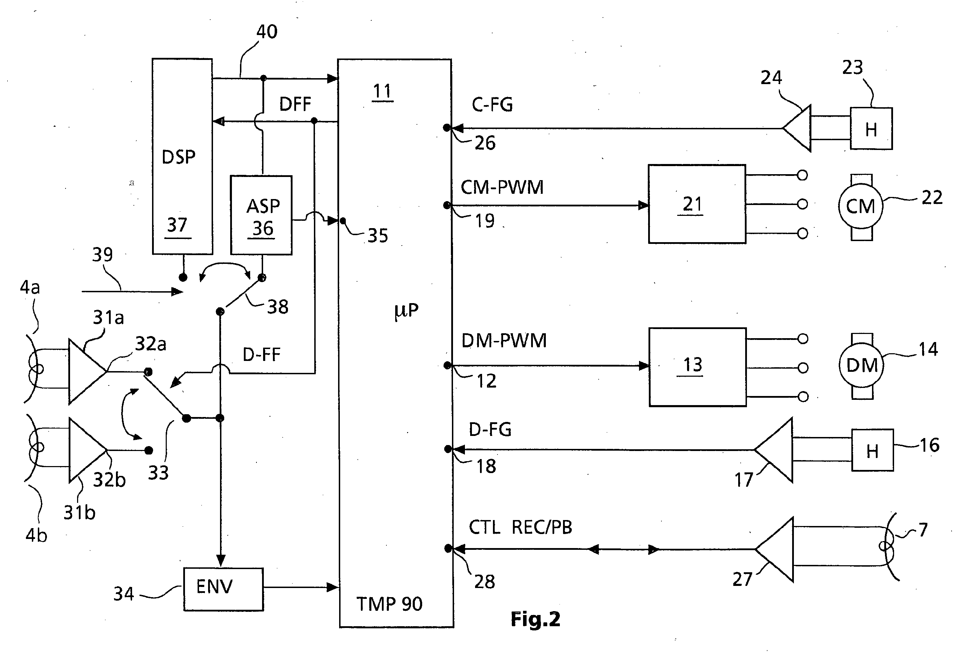

Fig. 2 shows a schematic block diagram of the head switching and tracking control apparatus. It is to be noted that for the sake of simplicity only the most relevant elements and components are shown in Fig. 2 whereas elements well known in the art are neglected. The head switching and tracking control apparatus is controlled by a microprocessor 11, e.g. a servo controller of the TMP 90 type available from Toshiba. The microprocessor 11 supplies at pin 12 pulse width modulated driving signals DM-PWM to a drum motor driving circuit 13. The driving circuit 13 supplies the coils of the drum motor 14 with a DC current corresponding to the DM-PWM signal received from the microprocessor 11. A first hall element 16 picks up a speed signal of a drum, which is generated by two magnets jointly rotating with a reading/recording heads of the drum. The output signal of the hall element 16 is amplified in amplifier 17. A D-FG signal at the output of amplifier 17 is connected to pin 18 of microprocessor 11. The D-FG signal is also indicative for the position of the reading heads 4a, 4b corresponding to the rotational position of the rotating cylinder of the drum. The D-FG head DM-PWM signals are used to establish a closed-loop control for the drum motor 14.

In a similar way the microprocessor 11 provides at pin 19 a capstan motor driving circuit 21 with a pulse width modulated signal CM-PWM. The driving circuit 21 supplies the coils of a capstan motor 22 with DC a current corresponding to the received CM-PWM signal. A second hall element 23 generates a pick-up signal indicating the rotational position and speed of the capstan motor 22. The output signal of the hall element 23 is amplified in amplifier 24 and fed as C-FG signal into pin 26 of microprocessor 11. The C-FG and CM-PWM signals are used to establish a closed-loop control for the capstan motor 22.

The CTL head 7 is connected to an associated head amplifier 27 and supplies the control signals read from control track 3 of the tape (Fig. 1) to input 28 of the microprocessor.

The reading heads 4a and 4b are connected to head amplifiers 31a and 31b, respectively. A first switch 33 selectively connects the outputs 32a and 32b of the amplifiers 31a and 31b to an envelope detector 34 and to a second switch 38. The operation of the first switch 33 is controlled by a head-switching signal D-FF generated by the microprocessor 11. The method for generating the D-FF signal will be described below. The second switch 38 connects the output of the first switch 33 selectively to an analogue signal processing circuit 36, and a digital signal processing circuit 37. The two signal processing circuits can also be integrated in a single IC. By way of example the SAA 6700 available from Philips can be used. The second switch 38 is operated by a discrimination signal 39 received by a discrimination circuit not shown in Fig. 2. The discrimination circuit senses the presence of a digitally recorded cassette, e.g. a D-VHS cassette. In the latter case the cassette has an identification hole, which is sensed mechanically. However, optical or electrical sensors can identify the type of cassette also. It is also possible that the outputs of the signal processing circuits 36, 37 are evaluated and in response to the result, an according output signal is generated. In any case the discrimination signal indicates whether an analogue or digital signal is read from the tape by reading heads 4a and 4b. In response to the discrimination signal, the output of head amplifiers 31a and 31b are connected to the analogue and digital signal processing 36, 37, respectively. A data line 40 establishes the communication between the signal processing circuits 36, 37 and the microprocessor 11. In an embodiment of the invention the data line 40 is an I2C bus.

The operation of the head switching control apparatus, described so far, will be explained in the following for a case that the data tracks 2a and 2b contain analogue data.

After the assembly of a VCR, a pre-recorded test tape is loaded into the VCR. By way of example the test tape can be recorded according to the VHS standard and an alignment procedure is initiated to adjust the head switching pulse D-FF relative to the drum pick-up pulses D-FG as described in the introduction. At the beginning of the adjustment process, the capstan motor 22 drives the tape 1 at a selected speed and the head drum rotates with a predetermined reference speed. Both are controlled by closed loop feedback controls as described in connection with Fig. 2. A D-FG pulse received at pin 18 starts an internal timer in the microprocessor 11. The timer is stopped again by the following rising edge of the vertical synchronisation pulse. Since an analogue tape is loaded into the VCR the vertical synchronisation signal is extracted from the video signal by the analogue signal processing circuit 36. The microprocessor receives the vertical synchronisation signal on pin 35. According to the VHS standard, the head switching pulse switching over between the rotating video heads has to occur 6.5 horizontal lines or 416 microseconds before the corresponding CTL pulse. To achieve this, the head switching pulse is triggered by the pick-up pulse of the drum and then delayed by a defined delay time calculated by the microprocessor such that the head switching pulse precedes the control pulse as required by the standard. The VHS standard calls for an alignment precision of +/- 1.5 horizontal lines or 96 microseconds.

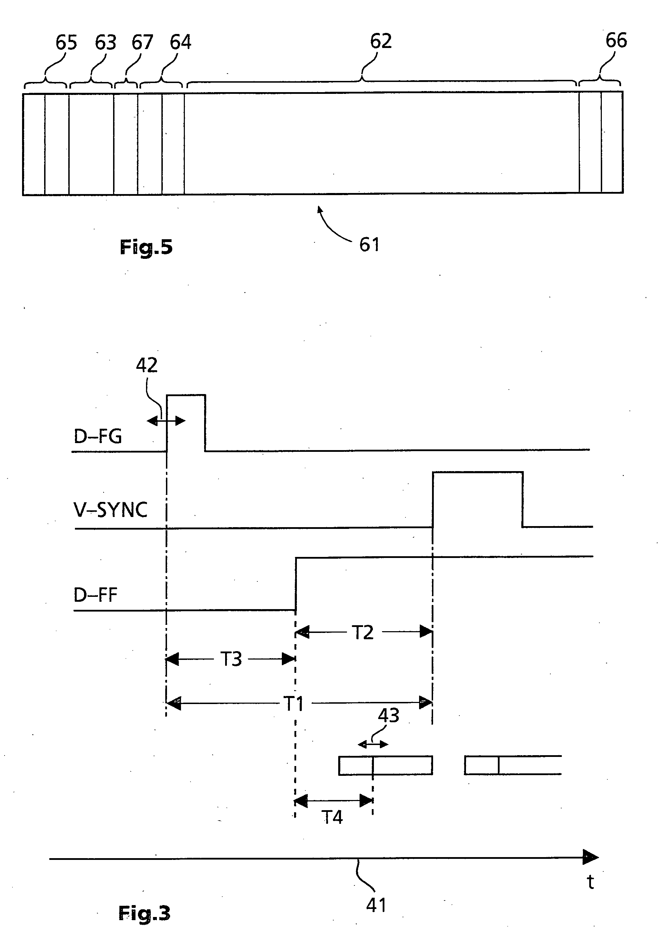

In Fig. 3 a diagram is shown visualizing the time relationship between the different types of signals. The co-ordinate axis 41 displays the direction of elapsing time. The first pulse that is received is the D-FG pulse indicating the position of the reading heads on the drum. After a time T1 the rising edge of the vertical synchronisation pulse V-SYNC is detected. Due to manufacturing tolerances, the relative position of the rising edges of the two pulses may vary as it is indicated at reference symbol 42.

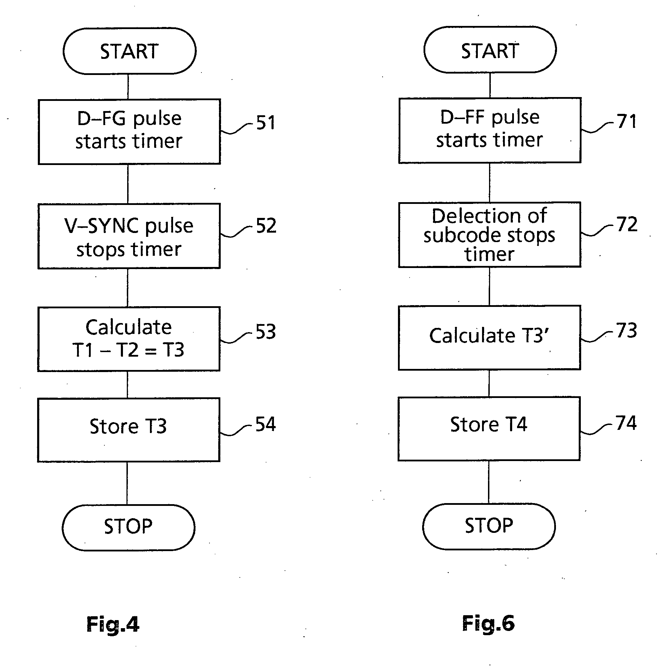

The evaluation of the different pulses is performed inside the microprocessor and illustrated in Fig. 4. The time duration T1 is measured inside the microprocessor by a timer, which is started by the rising edge of a pulse D-FG (step 51). The rising edge of the vertical synchronisation pulse stops the timer (step 52). The microprocessor 11 then calculates the time difference between the measured time T1 and the time duration T2, which is prescribed by the VHS standard (step 53). The result is then stored in a non-volatile memory inside microprocessor (step 54). During the operation of the VCR, the head switching pulse D-FF is triggered by the signal D-FG and delayed by the time T3 to bring the head switching pulse in compliance with the requirements of the VHS standard.

The described head switching control has proven to work completely satisfactorily in connection with analogue data. However, in connection with digital data, a higher precision of the head switching control is required which will become apparent when looking at an exemplary digital data block shown in Fig. 5. The data block 61 is divided into a main data section 62 and auxiliary in data section 63. Both data sections are preceded by run-in sections 64 and 65 and run-out sections 66 and 67. The allowed tolerance of the analogue head switching control of 96 microseconds may lead to problems when digital data are read from the tape. Therefore, the head switching control apparatus according to the present invention is provided with an additional head switching control when reading digital data.

Therefore, after the analogue head switching alignment has been finalized a digital head switching alignment is subsequently performed using a digitally recorded test tape. The digital test tape may be recorded according to the D-VHS standard for example. The digital head switching control utilizes the head switch pulse D-FF defined by the analogue head switching control as a reference point and measures the time duration T4 between the head switching pulse D-FF and the beginning of the auxiliary data section (Fig. 3). The beginning of the sub-code is detected by the digital signal processing circuit 37. The goal of the alignment is to bring the value of T4 close to a predetermined value. In a practical example the predetermined value is about 230 microseconds and the allowed tolerance of T4 from the predetermined value is +/- 20 microseconds. It is noted that theses numerical values are given only as an example and different values can be selected as well.

The measurement of T4 is performed in a similar way as the measurement of T3 and is illustrated in Fig. 6. The head switching pulse D-FF starts a timer inside the digital signal processing circuit 37 (step 71), which is subsequently stopped by the detection of the beginning of the sub-code (step 72). The result is the time duration T4, which is transferred to the microprocessor 11. The microprocessor 11 calculates a new delay time T3' for the head switching pulse D-FF such that T4 meets the predetermined value within the allowed tolerance (step 73). The microprocessor 11 then also stores the new delay time T3' in its non-volatile memory (step 74). Now the alignment process is completed and the tape recorder is ready for use.

When a user sets the tape recorder into operation for recording a tape the delay time T3 for analogue recording and T3' for digital recording are copied selectively from the non-volatile memory into a volatile memory in response to the selection of the recording type. The respective delay time is then used to perform the recording.

In playback mode of the tape recorder analogue tapes and digital tapes are handled differently.

For playing back an analogue tape conventional tracking control is performed as it is well known from VHS VCRs. The microprocessor 11 adjusts the phase of the capstan pulses C-FG relative to the drum pick-up pulses in response to the output of the envelope detector 34 to allow the signal read by video heads 4a and 4b to become maximal. The timing of the head switching pulses D-FF remains unchanged.

For playing back a digital tape the delay time T3' stored in the non-volatile memory secures optimal tracking for those tapes that have been recorded on the same tape recorder. However, for tapes that have been recorded on another recorder the delay time T3' may need adjustment to achieve best possible results. Therefore, the method for adjusting the head switching is performed each time a digital tape is played back. I.e. the time duration T4 is determined and the delay time T3' is calculated every time a digital tape is loaded and played back. However, the value for T3' determined during playback is not stored in the non-volatile memory but kept only in the RAM and is updated every time a playback is started.

Finally, it is noted that every time a user initiates a recording operation the appropriate delay time is copied from the non-volatile memory into the volatile memory.

## Claims

1. A head switching control apparatus for use with magnetic tape (1) comprising:
a head drum having at least two rotary heads (4a, 4b) arranged on the circumference of the head drum;
a capstan motor (22) adapted to be rotated at a predetermined speed to transport the magnetic tape (1);
a first timer for providing time data;
a reference signal generator (16, 17) for generating a predetermined reference signal (D-FG) in association with the time data;
a control signal reader for reproducing a control signal from the magnetic tape in association with the time data;
a head switching signal generator (11) for generating head switching signals (D-FF) in association with the time data, these signals being triggered by the reference signal (D-FG) and delayed by a predetermined first delay time (T3);
a microprocessor for calculating the time duration (T1) between the reference signal (D-FG) and the next following control signal and for calculating the delay time (T3) of the head switching signal (D-FF) following the reference signal (D-FG) and proceeding the control signal to establish a predetermined time relationship (T2) between the head switching signal (D-FF) and the control signal
**characterized in that**
the data track (2a, 2b) is composed of digital data comprising at least one data section (63);
that the apparatus comprises a digital data processing circuit (37) for discriminating the beginning of said data section (63);
that a second timer is started by the head switching signal (D-FF) and stopped by the beginning of said data section to determined the time duration (T4) a head switching signal (D-FF) precedes the beginning of said data section;
and **in that** said time duration (T4) is supplied to the microprocessor, which calculates a second delay time (T3') to bring said time data (T4) in accordance with a predetermined value.

2. Head switching control apparatus according to claim 1 **characterized in that** a first memory is provided for storing the first and the second delay time (T3, T3') at different addresses for selective reproduction.

3. Head switching control apparatus according to claim 2 **characterized in that** the first memory is a non-volatile memory and that second memory is provided into which the first and the second delay times (T3, T3') are selectively copied from the first non-volatile memory.

4. Head switching control apparatus according to claim 1 **characterized in that** the microprocessor is responsive to an indication signal (39) indicating whether the data track of the loaded magnetic tape contains analogue or digital data and **in that** the microprocessor reads in dependence of the indication signal the first and the second delay times (T3, T3') from the memory, respectively.

5. A video tape recorder comprising a head switching control apparatus according to one of the preceding claims.

6. A method for performing head switching in a magnetic tape apparatus having a rotary head drum and being used in connection with a magnetic tape, the method comprising the following steps:
generating time data;
receiving a reference signal (D-FG) in association with the time data;
receiving a control signal from the magnetic tape (1) in association with the time data;
generating head switching signals (D-FF) in association with the time data, these signals being triggered by the reference signal (D-FG) and delayed by a predetermined first delay time (T3);
calculating the time duration (T1) between the reference signal (D-FG) and the next following control signal;
calculating the delay time (T3) of the head switching signal (D-FF) following the reference signal (D-FG) and proceeding the control signal to establish a predetermined time relationship (T2) between the head switching signal (D-FF) and the control signal;
**characterized in that**
discriminating the beginning of a predetermined data section (63) on the data track (2a, 2b);
measuring the time duration (T4) a head switching signal (D-FF) precedes the beginning of said data section (63);
calculating a second delay time (T3') to bring said time duration (T4) in accordance with a predetermined value.

7. Method according to claim 6, **characterized by** the step of storing the delay time (T3, T3') in a memory.
